(19) Europäisches Patentamt
European Patent Office
Office européen des brevets

(11) **EP 1 338 799 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**19.01.2011 Patentblatt 2011/03**

(51) Int Cl.:
***F04D 29/32*** *(2006.01)*     ***F01D 5/14*** *(2006.01)*

(45) Hinweis auf die Patenterteilung:
**12.05.2004 Patentblatt 2004/20**

(21) Anmeldenummer: **03010895.5**

(22) Anmeldetag: **15.06.1998**

(54) **Verdichterschaufel**

Compressor blade

Pale de compresseur

(84) Benannte Vertragsstaaten:
**DE FR GB IT**

(30) Priorität: **24.06.1997 DE 19726847**

(43) Veröffentlichungstag der Anmeldung:
**27.08.2003 Patentblatt 2003/35**

(62) Dokumentnummer(n) der früheren Anmeldung(en) nach Art. 76 EPÜ:
**98936166.2 / 0 991 866**

(73) Patentinhaber: **SIEMENS AKTIENGESELLSCHAFT**
**80333 München (DE)**

(72) Erfinder:
• **Koeller, Ulf**
 **45470 Muelheim an der Ruhr (DE)**
• **Mönig, Reinhard, Dr.**
 **47877 Willich (DE)**

(56) Entgegenhaltungen:
**DE-A- 3 141 948    DE-B- 1 050 016**
**GB-A- 511 645    GB-A- 580 806**
**GB-A- 750 305    GB-A- 2 104 975**
**US-A- 4 773 825**

EP 1 338 799 B2

**Beschreibung**

Die Erfindung betrifft eine Verdichterschaufel und die Verwendung einer Verdichterschaufel.

In der DE 31 41 948 C2 ist eine Schaufel mit konischem Schaufelprofil für den Verdichter einer Gasturbine beschrieben. Es wird ausgeführt, daß in Kränzen angeordnete Schaufeln eines Verdichters bei der Durchströmung mit einem Gas hoher Geschwindigkeit Stoßwellen erfahren können. Das Gas strömt in einer Grenzschicht entlang der Oberfläche der betreffenden Schaufeln. Durch eine Stoßwelle kann es zu einer Ablösung dieser Grenzschicht von der Schaufeloberfläche kommen. Dies verursacht aerodynamische Verluste. Diese Verluste begrenzen den Wirkungsgrad der Schaufeln. Von besonderer Bedeutung sind solche Verluste in einem Trans-Schall-Strömungsfeld, d.h. in einem Strömungsfeld, welches Gebiete von lokaler Unterschallgeschwindigkeit und lokaler Überschallgeschwindigkeit nebeneinander enthält. Es besteht die Möglichkeit, zur Verringerung dieser Verluste die Kontur der Schaufel zu optimieren. Es wird in dieser Druckschrift eine Schaufel mit einem konischen Schaufelprofil, einer konturierten Saugfläche und einer konturierten Druckfläche angegeben, die sowohl eine gute aerodynamische Leistungsfähigkeit aufweist als auch einfach herstellbar ist. Angestrebt ist eine weitere Optimierung des Wirkungsgrades einer Verdichterschaufel.

Aufgabe der vorliegenden Erfindung ist es demnach, eine Verdichterschaufel anzugeben, die bezüglich des Wirkungsgrades besonders gute Eigenschaften aufweist. Weitere Aufgabe der Erfindung ist die Angabe einer Verwendung einer solchen Verdichterschaufel.

Erfindungsgemäß wird die auf die Angabe einer Verdichterschaufel gerichtete Aufgabe gelöst durch Angabe einer Verdichterschaufel gemäß Patentanspruch 1. Die erfindungsgemäße Verdichterschaufel umfasst ein Schaufelprofil, welches aufweist:

    a) einen Schaufelvorderkantenpunkt,
    b) einen Schaufelhinterkantenpunkt,
    c) eine Profilsehne, die eine gerade Strecke ist und sich vom Schaufelvorderkantenpunkt zum Schaufelhinterkantenpunkt erstreckt, wobei
    d) eine konvex gekrümmte Saugseitenkontur und eine der Saugseitenkontur gegenüberliegende Druckseitenkontur, welche jeweils den Schaufelvorderkantenpunkt und den Schaufelhinterkantenpunkt verbinden, aufweist und welches
    e) einen Kreis mit einem maximalen Durchmesser einschließt, welcher maximale Durchmesser eine maximale Profildicke definiert, wobei eine durch den Mittelpunkt dieses Kreises führende Kreisabstandsgerade die Profilsehne senkrecht schneidet und um einen Kreisabstand zum Schaufelvorderkantenpunkt derart beabstandet ist, dass der Kreisabstand kleiner als 32% der Länge der Profilsehne ist und
    f) eine Bezugsgerade, welche die Profilsehne im Abstand von 5% der Länge der Profilsehne zum Schaufelvorderkantenpunkt senkrecht schneidet, wobei die Bezugsgerade mit der Saugseitenkontur einen Saugseitenschnittpunkt bildet, in dem eine Saugseitentangente an der Saugseitenkontur anliegt und wobei die Bezugsgerade mit der Druckseitenkontur einen Druckseitenschnittpunkt bildet, in dem eine Druckseitentangente an der Druckseitenkontur anliegt, wobei die Saugseitentangente und die Druckseitentangente miteinander einen Tangentenwinkel zwischen 5° und 20° einschließen.

Weiterhin ist erfindungsgemäß mit den Bezeichnungen:

    D für die maximale Profildicke,
    L für die Länge der Profilsehne und
    T für den Tangentenwinkel
    gemäß

$$T_R = \frac{T}{100} \cdot \frac{L}{D}$$

ein relativer Tangentenwinkel $T_R$ definiert, der zwischen 1.2 und 2, liegt.

Eine so ausgestaltete Verdichterschaufel bietet den Vorteil, insbesondere bei Strömungsverhältnissen mit großen Reynoldszahlen und hohen Turbulenzgraden besonders niedrige aerodynamische Verluste aufzuweisen. Die Begriffe Reynoldszahl und Turbulenzgrad sind hierbei entsprechend der Definition in dem Buch "Strömungslehre" von Heinz Schade und Ewald Kunz, Verlag Walter De Gruyter, Berlin und New York, 1989, Seite 290 bzw. 325, zu verstehen.

Der Erfindung liegt die Erkenntnis zugrunde, daß übliche Optimierungen von Verdichterschaufeln nach experimentellen, in Windkanälen gewonnenen Meßdaten den realen Verhältnissen in einem Verdichter nicht ausreichend gerecht werden. Die erwähnten Strömungsverhältnisse mit großen Reynoldszahlen und hohen Turbulenzgraden sind im Windkanal in der Regel allenfalls mit hohem Aufwand realisierbar; sie sind aber in einem Verdichter, insbesondere in einem Verdichter mit großer Leistung, von erheblicher Bedeutung. Von dieser Erkenntnis ausgehend wurde die Ausgestaltung der oben beschriebenen, neuen Verdichterschaufel vorgenommen.

In einer vorteilhaften Ausgestaltung weist die Saugseitenkontur an einem Saugseitenschnittpunkt mit einer die Profilsehne bei 5% der Länge der Profilsehne senkrecht schneidenden Bezugsgeraden einen Krümmungsradius auf, der kleiner als die Hälfte der Länge der Profilsehne ist.

Bevorzugtermaßen stellt sich bei einer Umströmung der Verdichterschaufel mit einem Gas mit einer vorgegebenen Anströmgeschwindigkeit eine Grenzschicht des Gases an der Saugseitenkontur ein, in welcher Grenzschicht ein Geschwindigkeitsmaximum auftritt, wobei das Schaufelprofil so gewählt, daß sich bei einem Wert der Anströmgeschwindigkeit größer als Machzahl 0.4 ein Transitionsort ergibt, an dem sich die Umströmung von laminar nach turbulent ändert, und in welchem das Gas eine Transitionsgeschwindigkeit aufweist, die mindestens 90% des Geschwindigkeitsmaximums beträgt. Damit wird eine Schaufel bereitgestellt, die insbesondere dadurch geringe aerodynamische Verluste aufweist, daß sie die turbulente Strömung des Gases allenfalls über eine geringfügige Strecke beschleunigt. Dies wird dadurch erreicht, daß das Geschwindigkeitsmaximum, vor dessen Erreichen ausschließlich eine Beschleunigung des Gases erfolgt, sehr nahe am Umschlagpunkt zu einer turbulenten Strömung liegt. Da gerade die Beschleunigung einer turbulenten Strömung große aerodynamische Verluste nach sich zieht, werden durch die allenfalls geringfügige Beschleunigung der turbulenten Strömung die aerodynamischen Verluste klein gehalten.

Weiter bevorzugt stellt sich entlang der Saugseitenkontur vom Schaufelvorderkantenpunkt zum Schaufelhinterkantenpunkt bei einer Umströmung mit einem Gas mit einer vorgegebenen Anströmgeschwindigkeit an der Saugseitenkontur eine Grenzschicht des Gases ein, wobei das Schaufelprofil so gewählt ist, daß an einem Maximumort in der Grenzschicht ein Geschwindigkeitsmaximum auftritt, und wobei eine durch den Maximumort führende, die Profilsehne senkrecht schneidende Maximumgerade vom Schaufelvorderkantenpunkt um einen Maximumabstand beabstandet ist, der weniger als 15% der Länge der Profilsehne beträgt.

Die auf die Angabe einer Verwendung gerichtete Aufgabe wird erfindungsgemäß gelöst durch eine Verwendung der vorgenannten Verdichterschaufel in einem Verdichter einer stationären Gasturbine.

Gerade für die speziellen Strömungsbedingungen des Verdichters einer stationären Gasturbine ist es von besonderem Vorteil, speziell für große Reynoldszahlen und hohe Turbulenzgrade ausgelegte Verdichterschaufeln zur Minimierung aerodynamischer Verluste einzusetzen.

Ausführungsbeispiele der Erfindung werden anhand der Zeichnung näher erläutert. Es zeigen:

Fig 1    einen Querschnitt durch eine Verdichterschaufel,

Fig 2    einen Querschnitt durch eine luftumströmte Verdichterschaufel,

Fig 3    Positionen günstiger maximaler Profildicke einer Verdichterschaufel in Abhängigkeit von der Anströmgeschwindigkeit eines Gases,

Fig 4    den relativen Tangentenwinkel einer Verdichterschaufel in Abhängigkeit von der Anströmgeschwindigkeit eines Gases,

Fig 5    die Profildickenverteilung einer Verdichterschaufel entlang der Profilsehne und

Fig 6    eine Gasturbine mit Verdichter in schematischer Darstellung.

Gleiche Bezugszeichen haben in den verschiedenen Figuren die gleiche Bedeutung.

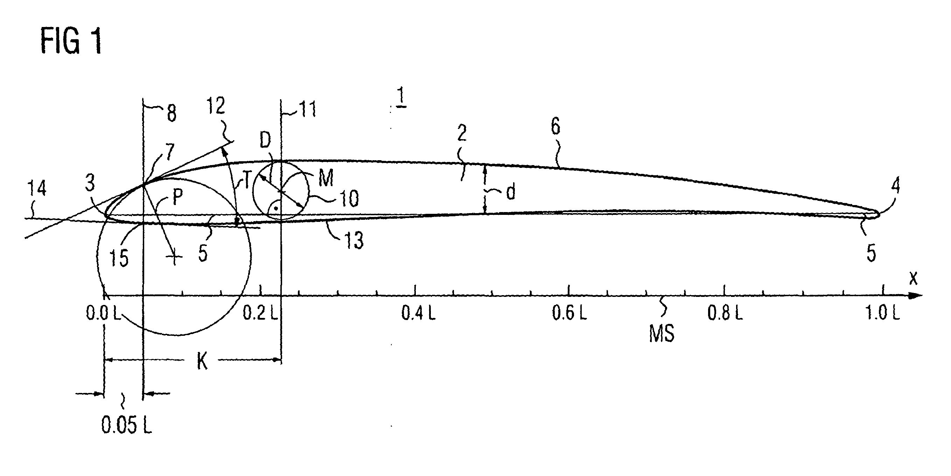

In Figur 1 ist ein Querschnitt durch eine Verdichterschaufel 1 abgebildet. Dieser Querschnitt stellt ein Schaufelprofil 2 dar. Das Schaufelprofil 2 weist einen Schaufelvorderkantenpunkt 3 und einen Schaufelhinterkantenpunkt 4 auf. Die gerade Strecke zwischen dem Schaufelvorderkantenpunkt 3 und dem Schaufelhinterkantenpunkt 4 ist die Profilsehne 5. Das Schaufelprofil 2 weist weiterhin eine den Schaufelvorderkantenpunkt 3 und den Schaufelhinterkantenpunkt 4 verbindende konvex gekrümmte Saugseitenkontur 6 auf. Der Saugseitenkontur 6 liegt eine den Schaufelvorderkantenpunkt 3 und den Schaufelhinterkantenpunkt 4 verbindende Druckseitenkontur 13 gegenüber. Die Profildicke ist mit d bezeichnet. Das Schaufelprofil 2 schließt einen Kreis 10 mit einem maximalen Durchmesser D ein. Durch den Mittelpunkt M des Kreises 10 führt eine Kreisabstandsgerade 11. Diese Kreisabstandsgerade 11 schneidet die Profilsehne 5 senkrecht in einem Kreisabstand K, gemessen vom Schaufelvorderkantenpunkt 3. Parallel zur Profilsehne 5 ist ein die Länge L der Profilsehne 5 verdeutlichender Maßstab MS eingezeichnet. Eine Bezugsgerade 8 schneidet die Profilsehne 5 senkrecht bei 5% der Länge L der Profilsehne 5, gemessen vom Schaufelvorderkantenpunkt 3. Dieser Wert ist mit 0.05L angegeben. Die Bezugsgerade 8 schneidet weiterhin die Druckseitenkontur 13 in einem Druckseitenschnittpunkt 15 und die Saugseitenkontur 6 in einem Saugseitenschnittpunkt 7. Die Saugseite 6 weist im Saugseitenschnittpunkt 7 eine Saugseitenkrümmung mit einem Krümmungsradius P auf. Im Saugseitenschnittpunkt 7 liegt eine Saugseitentangente 12 an der Saugseitenkontur 6 an. Im Druckseitenschnittpunkt 15 liegt an der Druckseitenkontur 13 eine Druckseitentangente 14 an. Die Saugseitentangente 12 und die Druckseitentangente 14 schließen miteinander einen Tangentenwinkel T ein.

Die Verdichterschaufel 1 ist nun besonders für den Einsatz bei Strömungsverhältnissen mit großen Reynolds-Zahlen und hohen Turbulenzgraden dadurch geeignet,

a) daß der Krümmungsradius P kleiner als die Hälfte der Länge L der Profilsehne 5 ist,
b) daß der Kreisabstand K kleiner als 32%, im geeigneten Fall gleich 23% der Länge L der Profilsehne 5 ist, und
c) daß der Tangentenwinkel T zwischen 5° und 20° liegt.

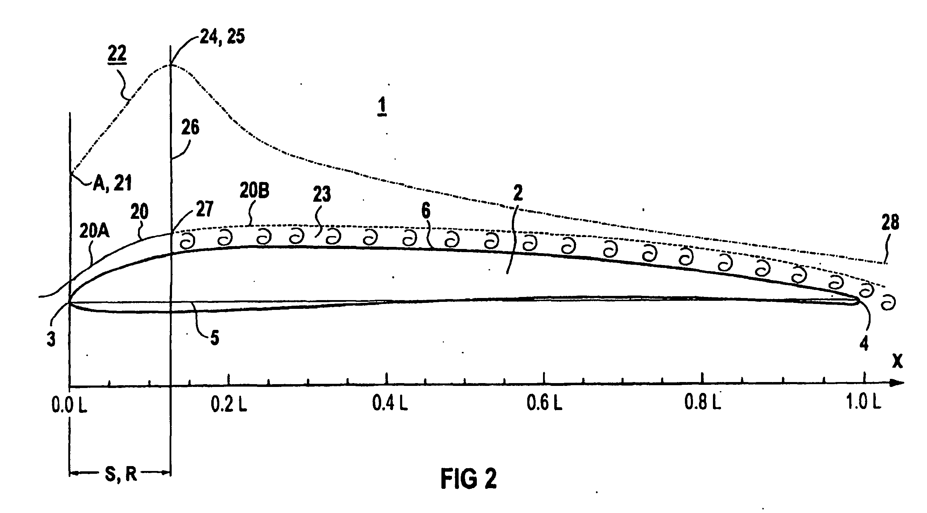

Figur 2 zeigt den Querschnitt der Verdichterschaufel 1 aus Figur 1. Es ist schematisch eine Umströmung der Verdichterschaufel 1 mit einem Gas 20 dargestellt. Dabei ist nur die Strömung des Gases 20 entlang der Saugseitenkontur 6 in einer Grenzschicht 23 abgebildet. Die Strömung des Gases 20 ist, gemessen vom Schaufelvorderkantenpunkt 3, zunächst eine laminare Strömung 20A. In einem Transitionsabstand R, gemessen entlang der Profilsehne 5 vom Schaufelvorderkantenpunkt 3, schlägt die laminare Strömung 20A in eine turbulente Strömung 20B um. Das Gas hat dort die Transitionsgeschwindigkeit 25. Die Geschwindigkeit des Gases 20 in Abhängigkeit vom Abstand vom Schaufelvorderkantenpunkt 3 ist gestrichelt als Geschwindigkeitsverteilung 22 eingezeichnet. Die Geschwindigkeitsverteilung 22 hat am Schaufelvorderkantenpunkt 3 einen Wert 21 für die Anströmgeschwindigkeit A. Mit zunehmendem Abstand X vom Schaufelvorderkantenpunkt 3 wächst die Geschwindigkeit des Gases 20. In einem Maximumabstand S vom Schaufelvorderkantenpunkt 3 wird ein Geschwindigkeitsmaximum 24 erreicht. Mit weiter zunehmendem Abstand X verringert sich die Geschwindigkeit des Gases 20, bis sie am Ende der Schaufel 1 einen Wert 28 erreicht hat, der geringer ist als der Wert 21 der Anströmgeschwindigkeit A.

Besonders niedrige aerodynamische Verluste, insbesondere bei Strömungsverhältnissen mit großen Reynoldszahlen und hohen Turbulenzgraden, werden dadurch erzielt, daß Transitionsabstand R und Maximumsabstand S zusammenfallen. Damit ergibt sich keine Beschleunigung für die turbulente Strömung 20B. Eine solche Beschleunigung hätte besonders hohe Verluste zur Folge. Weiterhin ergibt sich die für die genannten Strömungsverhältnisse besonders gute Eignung der Verdichterschaufel 1 daraus, daß der Maximumabstand S kleiner als 15% der Länge L der Profilsehne 5 ist.

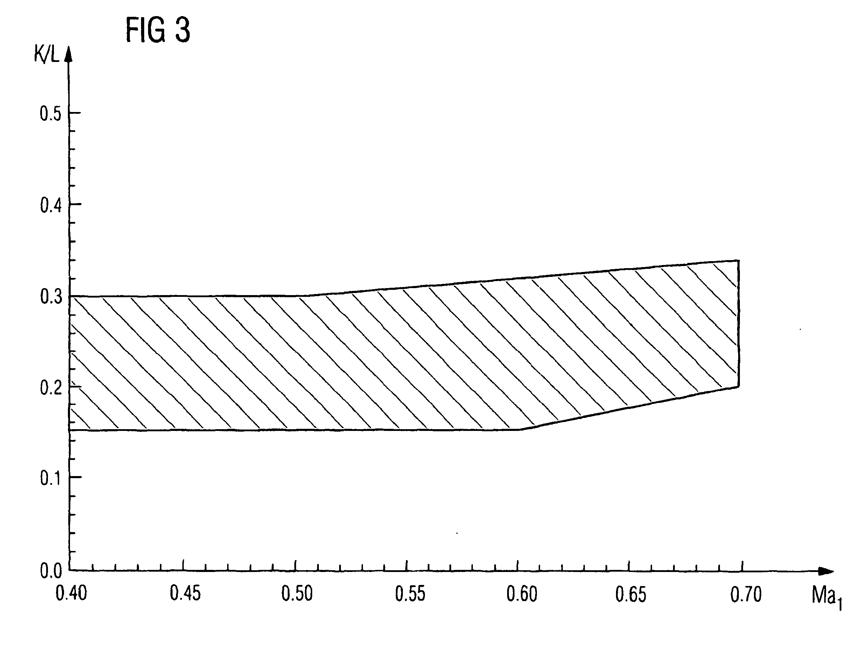

Figur 3 zeigt in einem Diagramm einen dunkel dargestellten Bereich von hinsichtlich der aerodynamischen Verluste geeigneter Werte für den Kreisabstand K aus Figur 1. Die Anströmgeschwindigkeit A wird in Werten der Machzahl $Ma_1$ angegeben, wobei der Wert $Ma_1$ = 1 die Schallgeschwindigkeit im Gas 20 bei gegebener Temperatur und bei gegebenem Druck bedeutet. Der Kreisabstand K ist in Einheiten der Länge L der Profilsehne 5 angegeben, wobei die Länge L der Profilsehne 5 auf 1 normiert ist. Für unterschiedliche Strömungsrandbedingungen, z.B. unterschiedliche Anströmwinkel des Gases 20 zur Verdichterschaufel 1, ergeben sich unterschiedliche Werte für den Kreisabstand K. Diese verschiedenen Werte ergeben den dunkel dargestellten Bereich. Hinsichtlich aerodynamischer Verluste geeignete Werte für den Kreisabstand K sind im wesentlichen kleiner als 30% der Länge L der Profilsehne 5.

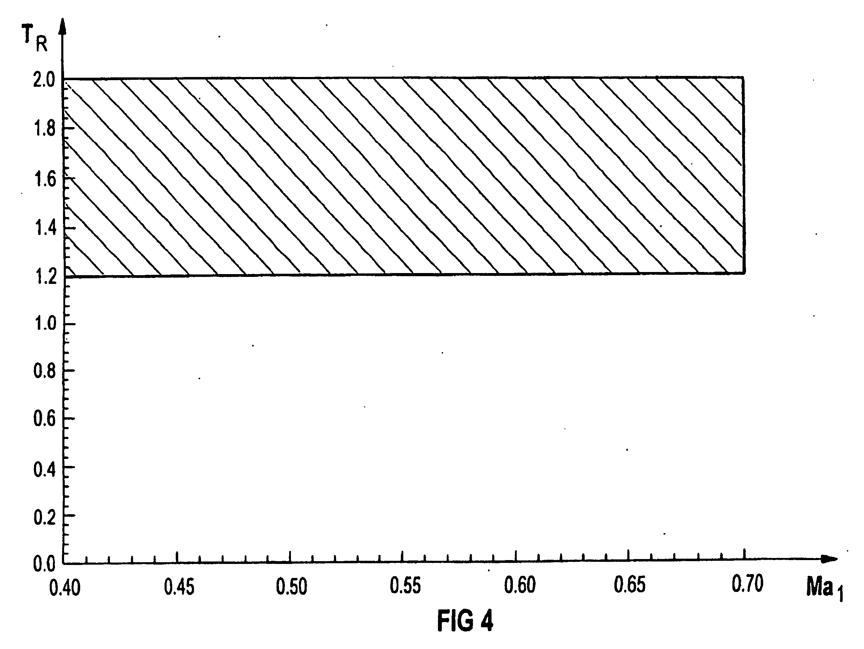

In Figur 4 ist der Tangentenwinkel T, ausgedrückt als relativer Tangentenwinkel $T_R$, in Abhängigkeit von verschiedenen Werten 21 für die Anströmgeschwindigkeit A dargestellt. Die Einheiten für die Anströmgeschwindigkeit A entsprechen den Einheiten aus Figur 3.

Der relative Tangentenwinkel $T_R$ ergibt sich aus dem Tangentenwinkel T nach Figur 1 gemäß

$$T_R = \frac{T}{100} \cdot \frac{L}{D}.$$

In Figur 4 ist der Bereich, der hinsichtlich aerodynamischer Verluste geeignete Werte für den relativen Tangentenwinkel $T_R$ enthält, dunkel dargestellt. Die verschiedenen Werte des Bereiches ergeben sich aus unterschiedlichen Strömungsrandbedingungen. Der relative Tangentenwinkel $T_R$ liegt demnach bevorzugt zwischen 1.2 und 2.0.

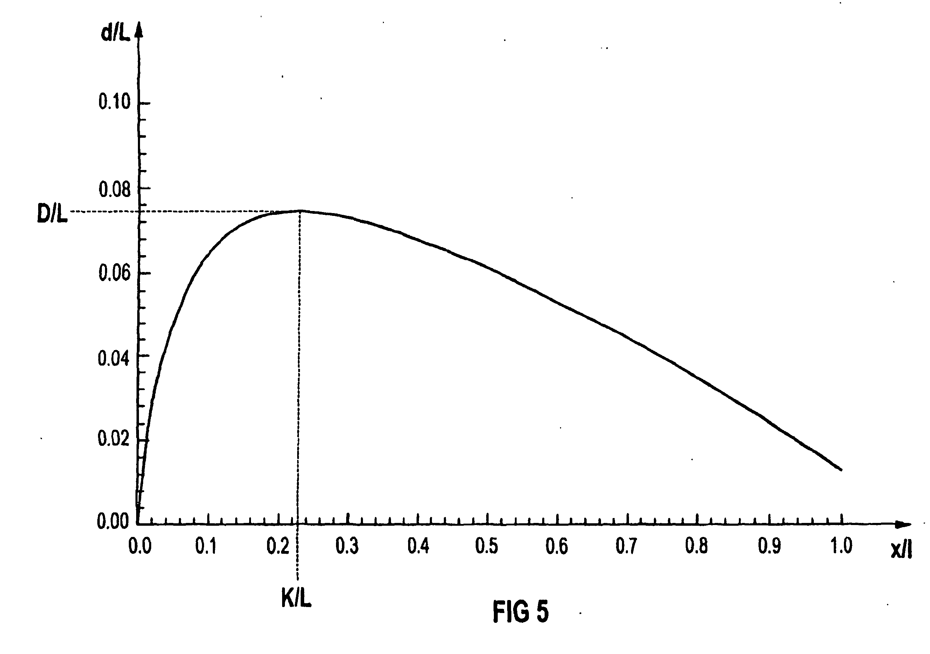

Figur 5 zeigt die Profildicke d der Verdichterschaufel 1 aus Figur 1 in Abhängigkeit vom Abstand X vom Schaufelvorderkantenpunkt 3 entlang der Profilsehne 5. Die Profildicke d und der Abstand X sind dabei auf die Länge L der Profilsehne normiert. Im Kreisabstand K von 23% der Länge L der Profilsehne 5, X = K = 0.23L ergibt sich eine maximale Profildicke d = D.

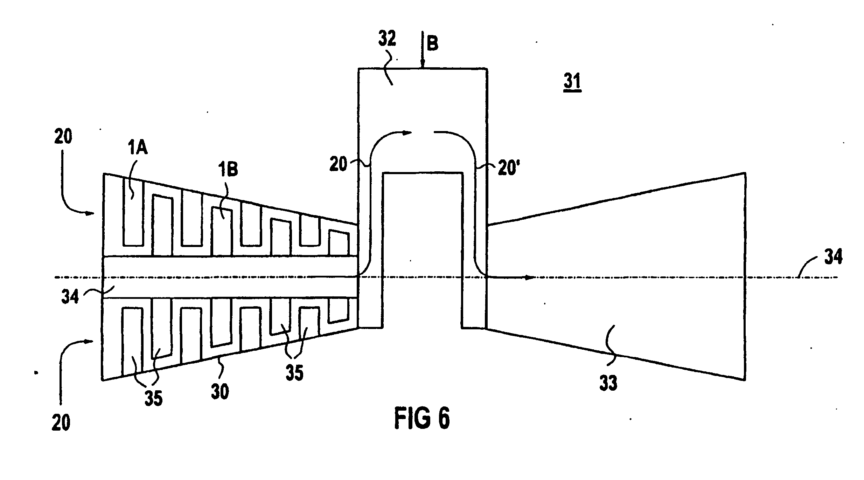

Figur 6 zeigt schematisch eine Gasturbine 31. Entlang einer Achse 34 sind ein Verdichter 30 und eine Turbine 33 hintereinander angeordnet. Zwischen dem Verdichter 30 und der Turbine 33 ist eine Brennkammer 32 geschaltet. Entlang der Achse 34 sind im Verdichter 30 Schaufelkränze 35 angeordnet. Diese Schaufelkränze 35 sind aus Verdichterschaufeln 1 gemäß Figur 1 aufgebaut. Entlang der Achse 34 wechseln sich Leitschaufelkränze 1A und Laufschaufelkränze 1B ab. Beim Betrieb der Gasturbine 31 wird Luft 20 in den Verdichter 30 gesaugt. Diese Luft 20 wird im Verdichter 30 komprimiert. Die komprimierte Luft 20 gelangt in die Brennkammer 32, wo sie unter Zufuhr von Brennstoff B zu Abgas 20' verbrannt wird. Das Abgas 20' entspannt sich in der Turbine 33. Dadurch wird die Turbine 33 angetrieben. Den im Verdichter 30 auftretenden Strömungsverhältnissen, die durch große Reynoldszahlen und hohe Turbulenzgrade gekennzeichnet sind, werden die Verdichterschaufeln 1 durch ihre oben dargelegte Ausgestaltung gerecht, so daß sich geringe aerodynamische Verluste und damit ein hoher Wirkungsgrad für die Gasturbine 31 ergeben.

**Patentansprüche**

1.    Verdichterschaufel (1) mit einem Schaufelprofil (2), welches

a) einen Schaufelvorderkantenpunkt (3),
b) einen Schaufelhinterkantenpunkt (4),
c) eine Profilsehne (5), die eine gerade Strecke ist und sich vom Schaufelvorderkantenpunkt (3) zum Schaufelhinterkantenpunkt (4) erstreckt,
d) eine konvex gekrümmte Saugseitenkontur (6) und eine der Saugseitenkontur (6) gegenüberliegende Druckseitenkontur (13), welche jeweils den Schaufelvorderkantenpunkt (3) und den Schaufelhinterkantenpunkt (4) verbinden, aufweist und welches

e) einen Kreis (10) mit einem maximalen Durchmesser (D) einschließt, welcher maximale Durchmesser (D) eine maximale Profildicke (D) definiert, wobei eine durch den Mittelpunkt (M) dieses Kreises (10) führende Kreisabstandsgerade (11) die Profilsehne (5) senkrecht schneidet und um einen Kreisabstand (K) zum Schaufelvorderkantenpunkt (3) beabstandet ist,

der kleiner als 32% der Länge (L) der Profilsehne (5) ist,

**dadurch gekennzeichnet,**

**dass** an der Saugseitenkontur (6) an einem Saugseitenschnittpunkt (7) mit einer die Profilsehne (5) bei 5% der Länge (L) der Profilsehne (5) senkrecht schneidenden Bezugsgeraden (8) eine Saugseitentangente (12) und an der Druckseitenkontur (13) an einem Druckseitenschnittpunkt (15) mit der Bezugsgeraden (8) eine Druckseitentangente (14) anliegt, wobei die Saugseitentangente (12) und die Druckseitentangente (14) miteinander einen Tangentenwinkel (T) zwischen 5° und 20° einschließen und

mit den Bezeichnungen:

D für die maximale Profildicke (D),
L für die Länge (L) der Profilsehne (5) und
T für den Tangentenwinkel (T) gemäß:

$$T_R = \frac{T}{100} \cdot \frac{L}{D}$$

ein relativer Tangentenwinkel $T_R$ definiert ist, der zwischen 1.2 und 2 beträgt.

**2.** Verdichterschaufel (1) nach Anspruch 1, **dadurch gekennzeichnet, daß** die Saugseitenkontur (6) an einem Saugseitenschnittpunkt (7) mit einer die Profilsehne (5) bei 5% der Länge (L) der Profilsehne (5) senkrecht schneidenden Bezugsgeraden (8) einen Krümmungsradius (P) aufweist, der kleiner als die Hälfte der Länge (L) der Profilsehne (5) ist.

**3.** Verdichterschaufel (1) nach einem der vorhergehenden Ansprüche, bei der sich bei einer Umströmung mit einem Gas (20) mit einer vorgegebenen Anströmgeschwindigkeit (A) an der Saugseitenkontur (6) eine Grenzschicht (23) des Gases (20) einstellt, in welcher ein Geschwindigkeitsmaximum (24) auftritt,

**dadurch gekennzeichnet, daß** das Schaufelprofil (2) so gewählt ist, daß sich bei einem Wert der Anströmgeschwindigkeit (A) größer als Machzahl 0.4 in der Grenzschicht (23) ein Transitionsort (26) ergibt, in welchem sich die Umströmung von laminar nach turbulent ändert und in welchem das Gas eine Transitionsgeschwindigkeit (25) aufweist, die mindestens 90% des Geschwindigkeitsmaximums (24) beträgt.

**4.** Verdichterschaufel (1) nach einem der Ansprüche 1 und 2, wobei sich entlang der Saugseitenkontur (6) vom Schaufelvorderkantenpunkt (3) zum Schaufelhinterkantenpunkt (4) bei einer Umströmung mit einem Gas (20) an der Saugseitenkontur (6) eine Grenzschicht (23) des Gases (20) einstellt,

**dadurch gekennzeichnet, daß** das Schaufelprofil (2) so gewählt ist, daß an einem Maximumort (27) in der Grenzschicht (23) ein Geschwindigkeitsmaximum (24) auftritt, wobei eine durch den Maximumort (27) führende, die Profilsehne (5) senkrecht schneidende Maximumgerade (26) vom Schaufelvorderkantenpunkt (3) um einen Maximumabstand (S) beabstandet ist, der weniger als 15% der Länge (L) der Profilsehne (5) beträgt.

**5.** Verwendung einer Verdichterschaufel (1) nach einem der vorhergehenden Ansprüche in einem Verdichter (30) einer stationären Gasturbine (31).

**Claims**

**1.** Compressor blade or vane (1) with a blade or vane section (2) which has:

a) a blade or vane leading edge point (3),
b) a blade or vane trailing edge point (4),
c) a section chord (5) which is a vertical and which extends from the blade or vane leading edge point (3) to the blade or vane trailing edge point (4),
d) a suction surface profile (6) of convex curvature and a pressure surface profile (13) opposite to the suction surface profile (6), each of which connects the blade or vane leading edge point (3) to the blade or vane trailing edge point (4), and which blade or vane section (2)
e) encloses a circle (10) with a maximum diameter (D), which maximum diameter (D) defines a maximum section thickness (D), with a centre distance vertical (11) passing through the centre (M) of this circle (10) intersecting the section chord (5) at right angles and being at a centre distance (K) from the blade or vane leading edge point (3) which is less than 32% of the length (L) of the section chord (5),

**characterized in that** a suction surface tangent (12) is in contact with the suction surface profile (6) at a suction surface intersection point (7) with a reference vertical (8) cutting the section chord (5) at right angles at 5% of the length (L) of the section chord (5) and a pressure surface tangent (14) is in contact with the pressure surface profile (13) at a pressure surface intersection point (15) with the reference vertical (8), the suction surface tangent (12) and the pressure surface tangent (14) enclosing between them a tangent angle (T) of between 5° and 20°, and with the designations:

D for the maximum section thickness (D),
L for the length (L) of the section chord (5) and
T for the tangent angle (T),
a relative tangent angle $T_R$, which is between 1.2 and 2, is defined by

$$T_R \ = \ \frac{T}{100} \cdot \frac{L}{D} \ .$$

2. Compressor blade or vane (1) according to Claim 1, **characterized in that** the suction surface profile (6) has a radius of curvature (P) at a suction surface intersection point (7) with a reference vertical (8) cutting the section chord (5) at right angles at 5% of the length (L) of the section chord (5), which radius of curvature (P) is less than half the length (L) of the section chord (5).

3. Compressor blade or vane (1) according to one of the preceding claims, in which a boundary layer (23) of the gas (20) appears on the suction surface profile (6) when a gas (20) flows around the compressor blade or vane (1) with a specified incident flow velocity (A), in which boundary layer (23) a velocity maximum (24) occurs, **characterized in that** the blade or vane section (2) is selected to ensure that at a value of the incident flow velocity (A) which is greater than a Mach number of 0.4, there is a transition location (26) in the boundary layer (23) at which the flow changes from laminar to turbulent and at which the gas has a transition velocity (25) which is at least 90% of the velocity maximum (24).

4. Compressor blade or vane (1) according to either of Claims 1 and 2, in which, when a gas (20) flows around the blade or vane, a boundary layer (23) of the gas (20) appears along the suction surface profile (6) from the blade or vane leading edge point (3) to the blade or vane trailing edge point (4), **characterized in that** the blade or vane section (2) is selected to ensure that a velocity maximum (24) occurs at a maximum velocity location (27) in the boundary layer (23), and a maximum velocity vertical (26) passing through the maximum velocity location (27), cutting the section chord (5) at right angles and being at a maximum velocity distance (S) from the blade or vane leading edge point (3) which is less than 15% of the length (L) of the section chord (5).

5. Use of a compressor blade or vane (1) according to one of the preceding claims in a compressor (30) of a stationary gas turbine (31)

**Revendications**

1. Aube (1) de compresseur, ayant un profil (2) d'aube qui présente :

a) un point (3) de bord d'attaque d'aube,
b) un point (4) de bord de fuite d'aube,
c) une corde (5) de profil qui est un segment droit et s'étend entre le point (3) de bord d'attaque d'aube et le point (4) de bord de fuite d'aube,
d) le profil (2) d'aube présentant un contour (6) d'extrados convexe et un contour (13) d'intrados situé en vis-à-vis du contour (6) d'extrados, lesquels contours relient le point (3) de bord d'attaque d'aube et le point (4) de bord de fuite d'aube,
(e) le profil (2) de l'aube circonscrit un cercle (10) d'un diamètre (D) maximal qui définit une épaisseur (D) maximale de profil, une droite (11) d'écartement de cercle, qui passe par le centre (M) de ce cercle (10), coupant perpendiculairement la corde (5) de profil et étant distante du point (3) de bord d'attaque d'aube d'un écartement (K) de cercle qui est inférieur à 32% de la longueur (L) de la corde (5) de profil,

**caractérisée en ce que** le contour (6) d'extrados au niveau d'un point (7) d'intersection avec une droite (8) de référence coupant perpendiculairement la corde (5) de profil à 5 % de la longueur (L) d la corde du profil a une tangente (12) d'extrados et le contour (13) d'intrados a au niveau d'un point (15) d'intersection avec la droite (8) de référence une tangente (14) d'intrados, la tangente (12) d'extrados et la tangente (14) d'intrados faisant entre elles un angle (T) de tangente compris entre 5 et 20° et il est défini par les paramètres :

D pour l'épaisseur (D) maximale de profil,
L pour la longueur (L) de la corde (5) de profil et
T pour l'angle (T) des tangentes
Suivant

$$T_R \ = \ \frac{T}{100} \cdot \frac{L}{D}$$

un angle de tangente relatif $T_R$ qui est compris entre 1.2 et 2.

2. Aube (1) de compresseur selon la revendication 1, **caractérisée en ce que** le contour (6) d'extrados, au niveau d'un point (7) d'intersection avec une droite (8) de référence coupant perpendiculairement la corde (5) de profil à 5% de la longueur (L) de celle-ci, a un rayon (P) de courbure qui est inférieur à la moitié de la longueur (L) de la corde (5) de profil, et

3. Aube (1) de compresseur selon l'une des revendications précédentes, dans laquelle lorsqu'un gaz (20) passe avec une vitesse d'entrée (A) prédéterminée, il se forme de préférence une couche (23) limite du gaz (20) sur le contour (6) de l'extrados, couche limite dans laquelle il apparaît un maximum (24) de vitesse,
**caractérisée en ce que** le profil (2) d'aube est choisi de telle sorte que pour une valeur de la vitesse d'entrée (A) supérieure à un Mach de 0.4, on obtient dans la couche (23) limite un lieu (26) de transition au niveau duquel l'écoulement passe d'un régime laminaire à un régime turbulent et dans lequel le gaz a une vitesse (25) de transition qui représente au moins 90% du maximum (24) de vitesse.

4. Aube (1) de compresseur selon l'une des revendications 1 et 2, une couche (23) limite de gaz (20) se formant le long du contour (6) d'extrados entre le point (3) de bord d'attaque d'aube et le point (4) de bord de fuite d'aube, lorsqu'un gaz (20) y passe,
**caractérisée en ce que** le profil (2) d'aube est choisi de telle sorte qu'un maximum (24) de vitesse apparaisse en un point (27) de maximum dans la couche (23) limite, une droite (26) de maximum, qui passe par le point (27) de maximum et coupe perpendiculairement la corde (5) de profil, étant distante du point (3) de bord d'attaque d'aube d'une distance maximale (S) qui représente moins de 15% de la longueur (L) de la corde (5) de profil.

5. Utilisation d'une aube (1) de compresseur selon l'une des revendications précédentes dans un compresseur (30) d'une turbine à gaz (31) fixe.

FIG 1

EP 1 338 799 B2

FIG 2

FIG 3

**FIG 4**

FIG 5

FIG 6

EP 1 338 799 B2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3141948 C2